# EUROPEAN PATENT SPECIFICATION

(11) **EP 4 427 442 B1**
(45) Date of publication and mention of the grant of the patent: **02.12.2026**
(21) Application number: 22889534.8
(22) Date of filing: 27.10.2022
(51) Int. Cl.: H04L 67/12, A62B 18/08, A62B 18/02

(54) **ARTICLE OF PERSONAL PROTECTIVE EQUIPMENT**
ARTIKEL EINER PERSÖNLICHEN SCHUTZAUSRÜSTUNG
ARTICLE D'ÉQUIPEMENT DE PROTECTION INDIVIDUELLE

(30) Priority: 04.11.2021 US 202163263544 P
(43) Date of publication of application: 11.09.2024
(73) Proprietor: 3M Innovative Properties Company, Saint Paul, Minnesota 55133-3427 (US)
(72) Inventor: THOMPSON, Darin K., Saint Paul, Minnesota 55133-3427 (US); PARKULO, Craig M., Saint Paul, Minnesota 55133-3427 (US); HOWELL, William B., Saint Paul, Minnesota 55133-3427 (US); AMERO, David A., Calgary, Alberta T2E 7S7 (CA); DELAMER, Ivan M., Calgary, Alberta T2E 7S7 (CA)
(74) Representative: Mathys & Squire
(86) International application number: PCT/IB2022/060340
(87) International publication number: WO 2023/079420

(56) References cited:
- KR-A- 20180 115 251
- US-A1- 2004 131 498
- US-A1- 2008 023 002
- US-A1- 2009 221 884
- US-A1- 2014 081 631
- US-A1- 2016 248 241
- US-A1- 2021 248 505

## Description

### Technical Field

The present disclosure relates to an article of personal protective equipment (PPE).

### Background

Articles of personal protective equipment (PPE), such as a self-contained breathing apparatus (SCBA) may be used by personnel working in hazardous environments. The article of PPE may include components which may require exchange of electric power as well as exchange of data signals with one another. In such articles of PPE, there may be a requirement for a high speed data transmission between the components.

US2009221884 A1 describes a system for monitoring vital signs (such as temperature and oxygen saturation) using personal protective equipment (PPE). It integrates sensors (e.g., thermal sensor in a mouth guard, pulse oximetry sensor in a helmet) into PPE so that, when worn, the sensors are placed in optimal positions to monitor physiological parameters.

### Summary

The invention is defined by independent claim 1, preferred embodiments are set in the dependent claims.

In a first aspect, the present disclosure provides an article of personal protective equipment (PPE). The article of PPE includes a first component including a first power interface and a first communication module. The first communication module includes at least one first transceiver. The first power interface is configured to receive a first electric power and supply at least a portion of the first electric power to the first communication module. The article of PPE further includes a second component including a second power interface and a second communication module. The second communication module includes at least one second transceiver. The second power interface is configured to receive a second electric power and supply at least a portion of the second electric power to the second communication module. The article of PPE further includes an intrinsic barrier disposed between and physically separating the first communication module from the second communication module. The first communication module and the second communication module are configured to automatically and wirelessly exchange data signals therebetween when a distance between the first component and the second component is less than or equal to a predetermined distance.

In a second aspect, the present disclosure provides an article of PPE. The article of PPE includes a facemask including a first component. The first component includes a first power interface and a first communication module. The first communication module includes at least one first transceiver. The first power interface is configured to receive a first electric power and supply at least a portion of the first electric power to the first communication module. The article of PPE further includes a regulator including a second component. The regulator is configured to be detachably mounted to the facemask and control a fluid supply to the facemask. The second component includes a second power interface and a second communication module. The second communication module includes at least one second transceiver. The second power interface is configured to receive a second electric power and supply at least a portion of the second electric power to the second communication module. The article of PPE further includes an intrinsic barrier disposed between and physically separating the first communication module from the second communication module when the regulator is detachably mounted to the facemask. The first communication module and the second communication module are configured to automatically and wirelessly exchange data signals therebetween when the regulator is detachably mounted to the facemask.

The details of one or more examples of the disclosure are set forth in the accompanying drawings and the description below. Other features, objects, and advantages of the disclosure will be apparent from the description and drawings, and from the claims.

### Brief Description of the Drawings

Exemplary embodiments disclosed herein is more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labelled with the same number.
FIG. 1 illustrates a schematic block diagram of an article of personal protective equipment (PPE), according to an embodiment of the present disclosure;
FIG. 2 illustrates a schematic block diagram of the article PPE, according to another embodiment of the present disclosure;
FIG. 3 illustrates a schematic view of the article of PPE, according to an embodiment of the present disclosure; and
FIG. 4 illustrates a detailed schematic block diagram of a facemask and a regulator of the article of PPE of FIG. 3, according to an embodiment of the present disclosure.

### Detailed Description

In the following description, reference is made to the accompanying figures that form a part thereof and in which various embodiments are shown by way of illustration. It is to be understood that other embodiments are contemplated and is made without departing from the scope or spirit of the present disclosure. The following detailed description, therefore, is not to be taken in a limiting sense.

In the following disclosure, the following definitions are adopted.

As used herein, all numbers should be considered modified by the term "about". As used herein, "a," "an," "the," "at least one," and "one or more" are used interchangeably.

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties).

As used herein, the terms "first" and "second" are used as identifiers. Therefore, such terms should not be construed as limiting of this disclosure. The terms "first" and "second" when used in conjunction with a feature or an element can be interchanged throughout the embodiments of this disclosure.

As used herein, "at least one of A and B" should be understood to mean "only A, only B, or both A and B".

As used herein, the term "hazardous or potentially hazardous environments" may refer to environments that include hazardous or potentially hazardous environmental conditions. The hazardous or potentially hazardous environments may include, for example, chemical environments, biological environments, nuclear environments, fires, industrial sites, construction sites, agricultural sites, mining sites, or manufacturing sites.

As used herein, the term "hazardous or potentially hazardous environmental conditions" may refer to environmental conditions that may be harmful to a human being, such as high noise levels, high ambient temperatures, lack of oxygen, presence of explosives, exposure to radioactive or biologically harmful materials, and exposure to other hazardous substances. Depending upon the type of safety equipment, environmental conditions and physiological conditions, corresponding thresholds or levels may be established to help define hazardous and potentially hazardous environmental conditions.

As used herein, the term "an article of personal protective equipment (PPE)" may include any type of equipment or clothing that may be used to protect a user from hazardous or potentially hazardous environmental conditions. In some examples, one or more individuals, such as the users, may utilize the article of PPE while engaging in tasks or activities within the hazardous or potentially hazardous environment.

Examples of the articles of PPE may include, but are not limited to, hearing protection (including ear plugs and ear muffs), respiratory protection equipment (including disposable respirators, reusable respirators, powered air purifying respirators, self-contained breathing apparatus and supplied air respirators), facemasks, oxygen tanks, air bottles, protective eyewear, such as visors, goggles, filters or shields (any of which may include augmented reality functionality), protective headwear, such as hard hats, hoods or helmets, protective shoes, protective gloves, other protective clothing, such as coveralls, aprons, coat, vest, suits, boots and/or gloves, protective articles, such as sensors, safety tools, detectors, global positioning devices, mining cap lamps, fall protection harnesses, exoskeletons, self-retracting lifelines, heating and cooling systems, gas detectors, and any other suitable gear configured to protect the users from injury. The articles of PPE may also include any other type of clothing or device/equipment that may be worn or used by the users to protect against extreme noise levels, extreme temperatures, fire, reduced oxygen levels, explosions, reduced atmospheric pressure, radioactive, and/or biologically harmful materials.

As used herein, the term "lines", unless otherwise indicated, refer to electrically conductive paths comprising various components, such as wires, cables, pads, traces, vias, junctions, connectors, etc. Such lines may be used to transmit electric current, electric signals, and so forth.

As used herein, the terms(s) "electrically connecting" and/or "electrically connected" refer to direct coupling between components and/or indirect coupling between components via one or more intervening electric components, such that an electric signal can be passed between the two components. As an example of indirect coupling, two components can be referred to as being electrically connected, even though they may have an intervening electric component between them which still allows an electric signal to pass from one component to the other component. Such intervening components may comprise, but are not limited to, wires, traces on a circuit board, and/or another electrically conductive medium/component.

As used herein, the term "communicably coupled to" refers to direct coupling between components and/or indirect coupling between components via one or more intervening components. Such components and intervening components may comprise, but are not limited to, junctions, communication paths, components, circuit elements, circuits, functional blocks, and/or devices. As an example of indirect coupling, a signal conveyed from a first component to a second component may be modified by one or more intervening components by modifying the form, nature, or format of information in a signal, while one or more elements of the information in the signal are nevertheless conveyed in a manner than can be recognized by the second component.

As used herein, the term "signal," includes, but is not limited to, one or more electrical signals, optical signals, electromagnetic signals, analog and/or digital signals, one or more computer instructions, a bit and/or bit stream, or the like.

As used herein, the term "galvanic isolation" is defined as a principle of isolating any two components of an electrical system, such that charge carrying particles cannot move from one component to another, i.e., there is no electric current flowing directly from the one component to the other. However, energy and/or other signals may be exchanged between the one component and the other component by other means, such as capacitance, induction, electromagnetic waves, optical, acoustic, or mechanical means.

As used herein, the term "a power interface" may refer to an electrical device or a component configured to receive an electric power and transmit a portion of the received electric power to other devices or components. The power interface may receive the electric power from a power source. In some cases, the power interface may be electrically connected to the power source through physical connections. In other words, the power interface may receive the electric power from the power source through a direct transmission of charged particles between the power interface and the power source. The power interface may be electrically connected to the power source through female connectors, such as receptacles, or through male connectors, such as plugs. The power interface may include technologies such as USB, micro-USB, mini-USB, C-type USB, 30-pin, Lightning, and the like.

An article of personal protective equipment (PPE), such as a self-contained breathing apparatus (SCBA), may be used by emergency personnel, such as firefighters, when working in a hazardous or potentially hazardous environment. Generally, the SCBA includes a facemask and a regulator detachably mounted to the facemask.

The facemask may include components, such as a heads-up display (HUD). Further, the regulator may include speakers and a microphone. The HUD and the speakers may communicate or indicate information and messages to a user of the SCBA from other emergency personnel in the hazardous environment, or from a central command. The microphone may be used by the user of the SCBA to transmit audio messages to the other emergency personnel or the central command.

In some cases, there may be a need to exchange electric power as well as exchange data signals between two components of the article of PPE. For example, there may be a need to exchange electric power as well as exchange data signals between the facemask and the regulator of the SCBA.

Conventionally, the two components of the article of PPE include intrinsic safety circuits to ensure that the article of PPE is intrinsically safe (IS). In some examples, at least one of the two components of the article of PPE may include the intrinsic safety circuits to limit a maximum electric power to prevent an overcurrent, a surge current, or other electrical overloads. The intrinsic safety circuits may further prevent a transfer of the overcurrent, the surge currents, or the other electrical overloads between the two components of the article of PPE. Thus, the intrinsic safety circuit may prevent damage to the two components of the article of PPE.

However, the intrinsic safety circuits may include intrinsic safety components, such as fuses, resistors, diodes, etc., which may limit a data exchange rate between the two components, such as the facemask and the regulator. In other words, the intrinsic safety components may inhibit high speed data transmission between the two components. The high speed data transmission may be required for timely transmitting large size data, such as video data or audio data, from one component to the other component of the two components of the article of PPE.

In an aspect, the present disclosure provides an article of PPE. The article of PPE includes a first component including a first power interface and a first communication module. The first communication module includes at least one first transceiver. The first power interface is configured to receive a first electric power and supply at least a portion of the first electric power to the first communication module. The article of PPE further includes a second component including a second power interface and a second communication module. The second communication module includes at least one second transceiver. The second power interface is configured to receive a second electric power and supply at least a portion of the second electric power to the second communication module. The article of PPE further includes an intrinsic barrier disposed between and physically separating the first communication module from the second communication module. The first communication module and the second communication module are configured to automatically and wirelessly exchange data signals therebetween when a distance between the first component and the second component is less than or equal to a predetermined distance.

As the intrinsic barrier is disposed between and physically separates the first communication module from the second communication module, the first communication module and the second communication module may not require the intrinsic safety circuits including the intrinsic safety components to prevent the overcurrent, the surge current, or any other electrical overload from being transferred between the first communication module and the second communication module. Therefore, the data signals may be exchanged between the first communication module and the second communication module at a high data exchange rate while the first and second components are intrinsically safe. Furthermore, the article of PPE may also be intrinsically safe.

The intrinsic safety circuit may be provided in at least one of the first power interface and at the second power interface in order to provide protection to the first component and the second component, respectively, against the overcurrent, the surge current or the other electrical overload conditions without negatively affecting the data exchange rate between the first component and the second component.

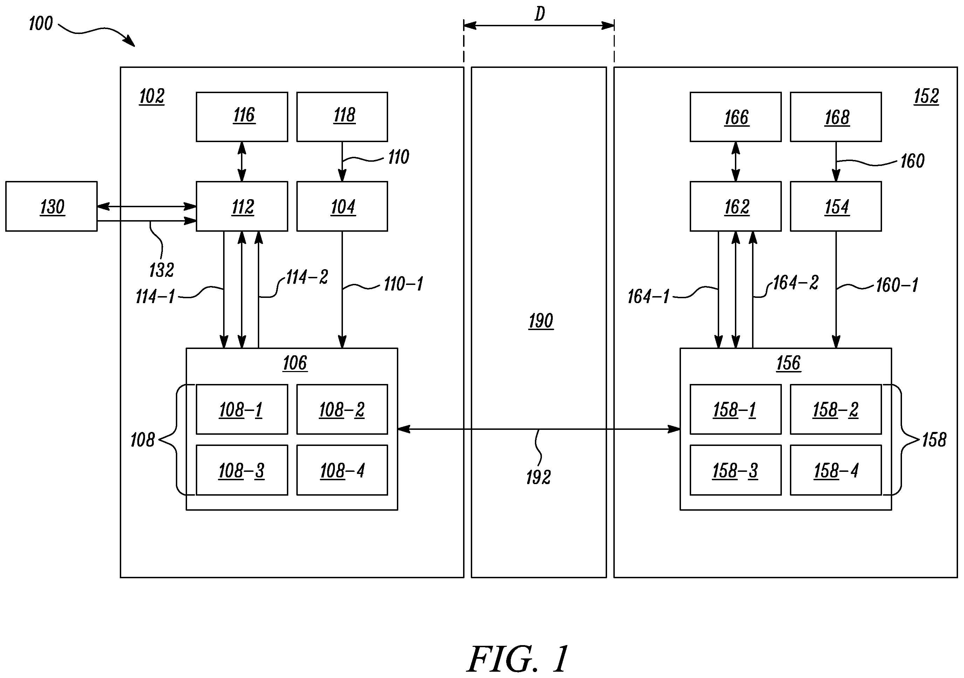

Referring now to figures, FIG. 1 illustrates a schematic block diagram of an article of personal protective equipment (PPE) 100, according to an embodiment of the present disclosure. The article of PPE 100 may be interchangeably referred to as "the article 100". In some cases, the article 100 may be used by a user (not shown) in an environment, such as a hazardous or potentially hazardous environment. In some examples, the user of the article 100 may be any emergency personnel, such as firefighters, first responders, healthcare professionals, paramedics, HAZMAT workers, security personnel, law enforcement personnel, or any other personnel working in the environment. In the cases where the user is a firefighter, the article 100 may be worn by the firefighter in the environment. In some examples, the article 100 may include a breathing apparatus such as a self-contained breathing apparatus (SCBA). In some other examples, the article 100 may include a respiratory protective equipment (RPS), a powered air purifying respirator (PAPR), a non-powered purifying respirator (APR), a self-retracting lifeline (SRL), or combinations thereof.

The article 100 includes a first component 102. The first component 102 includes a first power interface 104 and a first communication module 106. The first communication module 106 includes at least one first transceiver 108.

The first power interface 104 is configured to receive a first electric power 110.

In some embodiments, the first component 102 includes a first power source 118. In some embodiments, the first power interface 104 is electrically connected to the first power source 118 to receive the first electric power 110 from the first power source 118. Further, the first power interface 104 is configured to supply at least a portion 110-1 of the first electric power 110 to the first communication module 106. In some embodiments, the first power source 118 may include a direct current (DC) power source, such as a battery, a fuel cell, an ultracapacitor, and/or any other suitable voltage source. In some embodiments, the battery may be any type of battery, such as a lead acid battery, coin cells, a lithium-ion battery, a nickel-metal battery, and/or any other rechargeable battery. In some embodiments, the ultracapacitor may include a supercapacitor, an electrochemical double layer capacitor, and/or any other electrochemical capacitor with high energy density. In some embodiments, the first power source 118 may include an alternating power (AC) power source.

In some embodiments, the first power interface 104 may include an intrinsic safety circuit (not shown). The intrinsic safety circuit may include intrinsic safety components, such as fuses, resistors, diodes, etc. The intrinsic safety circuit may limit a maximum electrical power in the first component 102 in order to protect the first component 102 from an overcurrent, a surge current, and other electrical overload conditions.

In some embodiments, the at least one first transceiver 108 may be a near-field magnetic induction (NFMI) transceiver. In such embodiments, the at least one first transceiver 108 may transmit and/or receive data signals (e.g., data signals 114-1 and/or data signals 114-2) through an NFMI network.

NFMI is a short-range wireless technology where communication between any two components may occur through a tightly coupled magnetic field. NFMI may be human body friendly, reliable, secure, and a power efficient method of wireless communication. A modulated signal is transmitted by a transceiver of one component in the form of a magnetic field. The magnetic field induces a voltage on a transceiver of another component, which may be measured by an NFMI transceiver of the other component. A power density of NFMI signals attenuates at a rate inversely proportional to a distance between the transceivers of the two components. This type of wireless transmission may be referred to as a near-field communication (NFC).

In some embodiments, the at least one first transceiver 108 may be a radio-frequency (RF) transceiver. In such embodiments, the at least one first transceiver 108 may transmit and/or receive data signals (e.g., the data signals 114-1 and/or the data signals 114-2) through an RF network. In some examples, the RF network may utilize an extremely high frequency (EHF) spectrum between about 30 Gigahertz (GHz) and about 300 GHz. The EHF spectrum may be a low power, short range, and high data rate transmission means. In some examples, the RF network may facilitate data transfer at a rate of up to about 6 gigabits per second. Such an RF network may exhibit improved wireless transmission, including through non-conducting materials, such as wood, glass, plastic, etc.

In some other examples, the RF network may utilize transmission spectra, such as one or more of an extremely low frequency (ELF), a super low frequency (SLF), an ultra-low frequency (ULF), a very low frequency (VLF), a low frequency (LF), a medium frequency (MF), a high frequency (HF), a very high frequency (VHF), an ultra-high frequency (UHF), or a super high frequency (SHF).

In some embodiments, the at least one first transceiver 108 includes a plurality of first transceivers. In the illustrated embodiment of FIG. 1, the at least one first transceiver 108 includes four first transceivers 108-1, 108-2, 108-3, 108-4. The four first transceivers 108-1 to 108-4 may be collectively referred to as "the at least one first transceiver 108", or "the plurality of first transceivers 108".

In some embodiments, the plurality of first transceivers 108 may be substantially similar to each other. In some cases, the plurality of first transceivers 108 may include one or more primary transceivers (e.g., the first transceiver 108-1) and one or more secondary transceivers (e.g., the first transceivers 108-2 to 108-4). The one or more secondary transceivers may be utilized by the first communication module 106 when the one or more primary transceivers fail.

In some other embodiments, one or more first transceivers from the plurality of first transceivers 108 may be different from the others. In some cases, the first communication module 106 may transmit and/or receive the data signals through respective types of networks associated with the different types of first transceivers.

In some embodiments, the first component 102 further includes a first controller 112 communicably coupled to the first communication module 106. The first controller 112 may include a processor (not shown) and a memory (not shown) storing executable instructions. The processor may execute the instructions stored in the memory to implement a method or an algorithm. In some embodiments, the first controller 112 is configured to control the at least one first transceiver 108 of the first communication module 106 to transmit the data signals 114-1. In some embodiments, the first controller 112 is further configured to receive the data signals 114-2 from the at least one first transceiver 108 of the first communication module 106.

In some embodiments, the first component 102 further includes a first memory 116 communicably coupled to the first controller 112. The first memory 116 may include any computer-readable storage medium. In some embodiments, the article 100 further includes one or more sensors 130 communicably coupled to the first controller 112 of the first component 102. In some embodiments, the one or more sensors 130 of the article 100 may be configured to detect one or more parameters of the article 100 or of the environment in which the article 100 is situated. In some embodiments, the one or more sensors 130 may include at least one of an accelerometer, a gyroscope, a temperature sensor, a humidity sensor, a smoke sensor, and a gas sensor. In some embodiments, the one or more of the sensors 130 are configured to generate signals 132 indicative of the one or more parameters.

The article 100 further includes a second component 152. The second component 152 includes a second power interface 154 and a second communication module 156. The second communication module 156 includes at least one second transceiver 158.

The second power interface 154 is configured to receive a second electric power 160. In some embodiments, the second component 152 includes a second power source 168. In some embodiments, the second power interface 154 is electrically connected to the second power source 168 to receive the second electric power 160 from the second power source 168. Further, the second power interface 154 is configured to supply at least a portion 160-1 of the second electric power 160 to the second communication module 156. In some embodiments, the second power source 168 may include a DC power source. In some embodiments, the second power source 168 may include an AC power source.

In some embodiments, the second power interface 154 may include an intrinsic safety circuit (not shown). The intrinsic safety circuit may include intrinsic safety components, such as fuses, resistors, diodes, etc. The intrinsic safety circuit may limit a maximum electrical power in the second component 152 in order to protect the second component 152 from an overcurrent, a surge current, and other electrical overload conditions.

In some embodiments, the at least one second transceiver 158 may be a NFMI transceiver. In such embodiments, the at least one second transceiver 158 may transmit and/or receive data signals (e.g., data signals 164-1 and/or data signals 164-2) through the NFMI network. Therefore, in some embodiments, each of the at least one first transceiver 108 and the at least one second transceiver 158 is the NFMI transceiver.

In some embodiments, the at least one second transceiver 158 may be an RF transceiver. In such embodiments, the at least one second transceiver 158 may transmit and/or receive data signals (e.g., the data signals 164-1 and/or the data signals 164-2) through an RF network. Therefore, in some embodiments, each of the at least one first transceiver 108 and the at least one second transceiver 158 is the RF transceiver.

In some embodiments, the at least one second transceiver 158 includes a plurality of second transceivers. In the illustrated embodiment of FIG. 1, the at least one second transceiver 158 includes four second transceivers 158-1, 158-2, 158-3, 158-4. The four second transceivers 158-1 to 158-4 may be collectively referred to as "the at least one second transceiver 158", or "the plurality of second transceivers 158".

In some embodiments, the plurality of second transceivers 158 may be substantially similar to each other. In some cases, the plurality of second transceivers 158 may include one or more primary transceivers (e.g., the second transceiver 158-1) and one or more secondary transceivers (e.g., the second transceivers 158-2 to 158-4). The one or more secondary transceivers may be utilized by the second communication module 156 when the one or more primary transceivers fail.

In some other embodiments, one or more second transceivers from the plurality of second transceivers 158 may be different from the others. In some cases, the second communication module 156 may transmit and/or receive the data signals through respective types of networks associated with the different types of second transceivers.

For example, the first transceivers 108-1, 108-2 may be NFMI transceivers and the second transceivers 158-1, 158-2 may be corresponding NFMI transceivers. Similarly, the first transceivers 108-3, 108-4 may be RF transceivers and the second transceivers 158-3, 158-4 may be corresponding RF transceivers. In some examples, the first transceivers 108-1, 108-2 and the second transceivers 158-1, 158-2 may be primary transceivers, and the first transceivers 108-3, 108-4 and the second transceivers 158-3, 158-4 may be secondary transceivers.

In some embodiments, the second component 152 further includes a second controller 162 communicably coupled to the second communication module 156. The second controller 162 may include a processor (not shown) and a memory (not shown) storing executable instructions. The processor may execute the instructions stored in the memory to implement a method or an algorithm. In some embodiments, the second controller 162 is configured to control the at least one second transceiver 158 of the second communication module 156 to transmit the data signals 164-1. In some embodiments, the second controller 162 is further configured to receive the data signals 164-2 from the at least one second transceiver 158 of the second communication module 156.

In some embodiments, the second component 152 further includes a second memory 166 communicably coupled to the second controller 162. The second memory 166 may include any computer-readable storage medium.

The article 100 further includes an intrinsic barrier 190 disposed between and physically separating the first communication module 106 from the second communication module 156. In some embodiments, the intrinsic barrier 190 includes an air gap or a dielectric.

The intrinsic barrier 190 physically and electrically separates the first communication module 106 from the second communication module 156. In some cases, the intrinsic barrier 190 physically and electrically separates the at least one first transceiver 108 from the at least one second transceiver 158. As a result, the intrinsic barrier 190 may reduce a likelihood of an overcurrent, a surge current, or any other electrical overload from being transferred between the first communication module 106 and the second communication module 156.

The first communication module 106 and the second communication module 156 are configured to automatically and wirelessly exchange data signals 192 therebetween when a distance between the first component 102 and the second component 152 is less than or equal to a predetermined distance. The distance between the first component 102 and the second component 152 is shown schematically by a distance D in FIG. 1. In some embodiments, the predetermined distance is less than or equal to 10 centimeters (cm). In some embodiments, the predetermined distance is less than or equal to 8 cm, less than or equal to 6 cm, less than or equal to 4 cm, less than or equal to 2 cm, or less than or equal to 1 cm.

Therefore, the data signals 192 may be exchanged between the first communication module 106 and the second communication module 156 wirelessly when the first communication module 106 and the second communication module 156 are in proximity of each other. Further, due to the physical and electrical separation of the first communication module 106 from the second communication module 156 by the intrinsic barrier 190, there may not be a need for the first communication module 106 or the second communication module 156 to include intrinsic safety circuits. As a result, the data signals 192 may be exchanged between the first communication module 106 and the second communication module 156 at a higher data exchange rate than between conventional components of a conventional article of PPE including the intrinsic safety circuits including intrinsic safety components. Specifically, presence of the intrinsic safety circuits including the intrinsic safety components, such as fuses, resistors, diodes, etc. may negatively affect the data exchange rate between the conventional components. In some examples, the data signals 192 may be exchanged at a rate of up to about 100 megabits per second, up to about 1000 megabits per second, up to about 1 gigabit per second, up to about 6 gigabits per second, or up to about 10 gigabits per second.

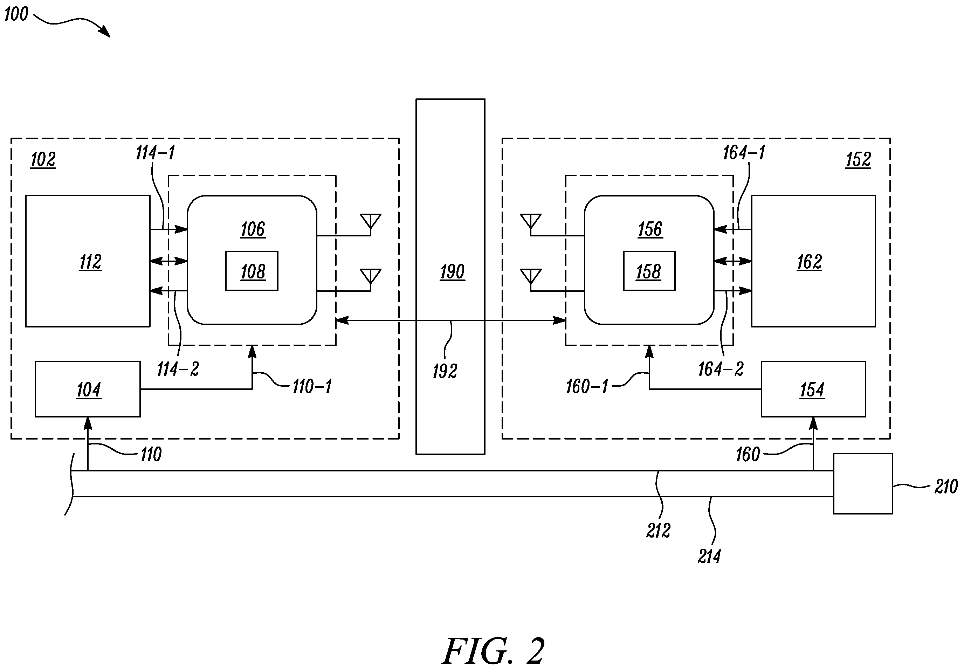

FIG. 2 illustrates a schematic block diagram of the article of PPE 100, according to another embodiment of the present disclosure. In the illustrated embodiment of FIG. 2, the article 100 includes a common power source 210. In some embodiments, the common power source 210 may include a power line 212 and a common ground 214. In some embodiments, the common power source 210 may include a DC power source or an AC power source. In some embodiments, the common power source 210 may include a battery pack (not shown) of the article 100. In some embodiments, the first power interface 104 is electrically connected to the common power source 210. In some embodiments, the first power interface 104 receives the first electric power 110 from the common power source 210. In some embodiments, the second power interface 154 is galvanically isolated from the common power source 210. In some embodiments, the second power interface 154 receives the second electric power 160 from the galvanically isolated common power source 210.

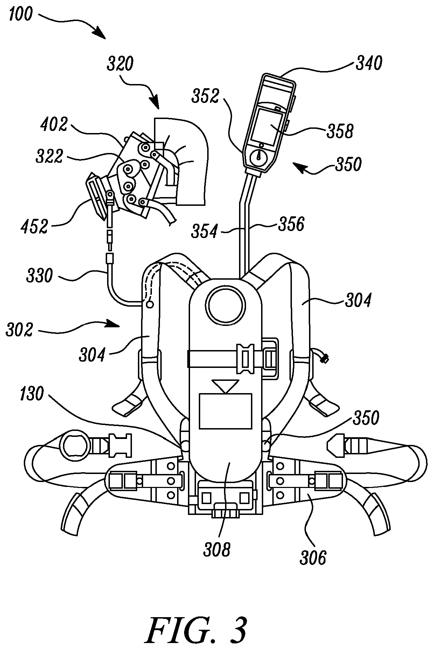

FIG. 3 illustrates a schematic view of the article of PPE 100, according to an embodiment of the present disclosure. In some embodiments, the article 100 includes a back frame 302 including shoulder straps 304 and a belt 306, that is wearable by the user. The article 100 further includes an air cylinder 308 mounted on the back frame 302. The air cylinder 308 may include pressurized breathable air. The article 100 further includes a facemask 402.

In some embodiments, the facemask 402 may include a heads-up display (HUD) 322. The HUD 322 may display one or more parameters to the user of the article 100. The one or more parameters may include parameters associated with a state of health of the article 100, parameters associated with the environment of the article 100, or a combination thereof. In some embodiments, the parameters associated with the state of health of the article 100 may include a remaining level of air in the air cylinder 308, the battery level of a battery pack (not shown) of the article 100, and the like. In some embodiments, the parameters associated with the environment of the article 100 may include a temperature of the environment, a level of smoke or dust in the environment, a level of any gases in the environment, a location of other emergency personnel in the environment, and the like. In some embodiments, the HUD 322 may further display a notification including instructions or information received from a central command (not shown), and/or from other portable devices (not shown). Specifically, the parameters associated with the state of health of the article 100 and/or the parameters associated with the environment of the article 100 may be ascertained via the one or more sensors 130 (also shown in FIG. 1). For example, the remaining level of air in the air cylinder 308 may be ascertained via a pressure sensor (not shown) located at an outlet pathway of the air cylinder 308.

The article 100 further includes a regulator 452 configured to be detachably mounted to the facemask 402. The regulator 452 is configured to be detachably mounted to the facemask 402 and control a fluid supply to the facemask 402. In some embodiments, the regulator 452 includes one or more valves (not shown) configured to control the fluid supply to the facemask 402. In some embodiments, the one or more valves are configured to control an air supply from the air cylinder 308 to the facemask 402. In some embodiments, the article 100 may include an air line/data line 330, which supplies air from the air cylinder 308 to the regulator 452 and provides data communications and power supply to the regulator 452. In some embodiments, the air line/data line 330 may be electrically connected to the battery pack. In some embodiments, the battery pack may include the common power source 210 (shown in FIG. 2).

In some embodiments, the article 100 may further include an electronics module 340. The electronics module 340 may be communicably coupled to the one or more sensors 130. The electronics module 340 may further be communicably coupled to the regulator 452 through the air line/data line 330. However, in some embodiments, the electronics module 340 may be communicably coupled to the regulator 452 in a wireless manner. In the illustrated embodiment of FIG. 3, the one or more sensors 130 includes one sensor 130. The one sensor 130 is disposed at a base of the air cylinder 308, on the belt 306. In some other embodiments, the one or more sensors 130 may be disposed at different areas, for example, on the shoulder straps 304.

The article 100 may further include a headgear 320 that may be worn on a head of the user. The headgear 320 may be used to provide protection to the head of the user. The headgear 320 may further include a hearing device (not shown). In some examples, the hearing device may include a wired/wireless headphone and/or earphone. In some other examples, the hearing device may include a hearing protection device, such as, a pair of earmuffs.

The article 100 may further include a personal alert safety system (PASS) device 350. The PASS device 350 may include a PASS control console 352. The PASS control console 352 may hang from an end of a pressure data line 354, connected via a pressure reducer (not shown) to the air cylinder 308, and a reinforced cable sheath 356. The article 100 may further include a personal digital assistance (PDA) device 358. The PDA device 358 may be located on the PASS device 350. In the illustrated embodiment of FIG. 3, the PASS device 350 is shown to be distributed at two locations on the article 100 - at an end of the reinforced cable sheath 356, and at a base of the air cylinder 308, on the belt 306. In some embodiments, the reinforced cable sheath 356 carries electronic cables that connect the PASS control console 352 with the one or more sensors 130 and the PASS device 350.

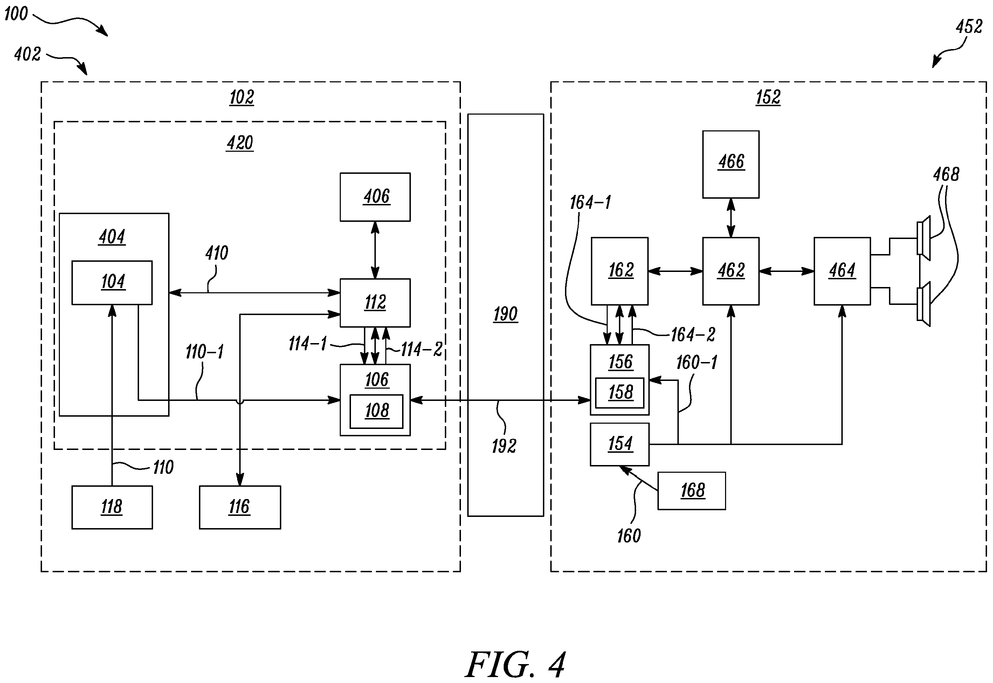

FIG. 4 illustrates an exemplary detailed schematic block diagram of the facemask 402 and the regulator 452 of the article of PPE 100. In the illustrated embodiment of FIG. 4, the facemask 402 includes the first component 102 and the regulator 452 includes the second component 152.

The first component 102 further includes a HUD unit 420. In some embodiments, the HUD unit 420 may be configured to operate the HUD 322 (shown in FIG. 3) of the article 100. In some embodiments, the HUD unit 420 includes a HUD interface 404. In some embodiments, the HUD interface 404 is configured to exchange data signals 410 with the first controller 112. The data signals 410 may include information that is to be displayed on the HUD 322. In some embodiments, the HUD interface 404 further includes the first power interface 104.

In some embodiments, the first component 102 further includes one or more visual indicators 406 communicably coupled to the first controller 112. In some embodiments, the HUD unit 420 of the first component 102 further includes the one or more visual indicators 406 communicably coupled to the first controller 112. In some embodiments, the first controller 112 may control visual parameters of the one or more visual indicators 406 to indicate or communicate information to the user. In some embodiments, the one or more visual indicators 406 may include one or more light sources. In some embodiments, the one or more light sources may include light emitting diodes (LEDs). In such embodiments, the visual parameters may include one or more of a flicker rate, an optical intensity, a wavelength, or a switching pattern of the one or more light sources.

In some embodiments, the second component 152 includes a microphone 466. In some embodiments, the second component 152 further includes an encoder-decoder module 462 communicably coupled to the microphone 466 and the second controller 162. In some embodiments, the second component 152 further includes a speaker driver circuit 464 communicably coupled to the encoder-decoder module 462 and one or more speakers 468 communicably coupled to the speaker driver circuit 464. In the illustrated embodiment of FIG. 4, the second component 152 includes two speakers 468.

In some embodiments, the second power interface 154 may further be configured to supply portions of the second electric power 160 to the encoder-decoder module 462, the speaker driver circuit 464, the speakers 468, and the microphone 466.

The article 100 includes the intrinsic barrier 190 disposed between and physically separating the first communication module 106 from the second communication module 156 when the regulator 452 is detachably mounted to the facemask 402. Further, the first communication module 106 and the second communication module 156 are configured to automatically and wirelessly exchange the data signals 192 therebetween when the regulator 452 is detachably mounted to the facemask 402. Therefore, the article of PPE 100 may allow the data signals 192 to be exchanged between the first component 102 and the second component 152.

As the intrinsic barrier 190 is disposed between and physically separates the first communication module 106 from the second communication module 156, the first communication module 106 and the second communication module 156 may not require the intrinsic safety circuits including the intrinsic safety components in order to prevent an overcurrent, a surge current, or any other electrical overload from being transferred between the first communication module 106 and the second communication module 156. As discussed above, the presence of the intrinsic safety circuits including the intrinsic safety components may negatively affect the data exchange rate between two components. In other words, the intrinsic safety components may inhibit high speed data transmission between the two components. Since, the first communication module 106 and the second communication module 156 do not require such intrinsic safety circuits, the data signals 192 may be exchanged between the first communication module 106 and the second communication module 156 at a high data exchange rate while the first and second components 102, 152 are intrinsically safe.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

Spatially related terms, including but not limited to, "proximate," "distal," "lower," "upper," "beneath," "below," "above," and "on top," if used herein, are utilized for ease of description to describe spatial relationships of an element(s) to another. Such spatially related terms encompass different orientations of the device in use or operation in addition to the particular orientations depicted in the figures and described herein. For example, if an object depicted in the figures is turned over or flipped over, portions previously described as below or beneath other elements would then be above or on top of those other elements.

As used herein, when an element, component, or layer for example is described as forming a "coincident interface" with, or being "on," "connected to," "coupled with," "stacked on" or "in contact with" another element, component, or layer, it can be directly on, directly connected to, directly coupled with, directly stacked on, in direct contact with, or intervening elements, components or layers may be on, connected, coupled or in contact with the particular element, component, or layer, for example. When an element, component, or layer for example is referred to as being "directly on," "directly connected to," "directly coupled with," or "directly in contact with" another element, there are no intervening elements, components or layers for example. The techniques of this disclosure may be implemented in a wide variety of computer devices, such as servers, laptop computers, desktop computers, notebook computers, tablet computers, hand-held computers, smart phones, and the like. Any components, modules or units have been described to emphasize functional aspects and do not necessarily require realization by different hardware units. The techniques described herein may also be implemented in hardware, software, firmware, or any combination thereof. Any features described as modules, units or components may be implemented together in an integrated logic device or separately as discrete but interoperable logic devices. In some cases, various features may be implemented as an integrated circuit device, such as an integrated circuit chip or chipset. Additionally, although a number of distinct modules have been described throughout this description, many of which perform unique functions, all the functions of all of the modules may be combined into a single module, or even split into further additional modules. The modules described herein are only exemplary and have been described as such for better ease of understanding.

If implemented in software, the techniques may be realized at least in part by a computer-readable medium comprising instructions that, when executed in a processor, performs one or more of the methods described above. The computer-readable medium may comprise a tangible computer-readable storage medium and may form part of a computer program product, which may include packaging materials. The computer-readable storage medium may comprise random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The computer-readable storage medium may also comprise a non-volatile storage device, such as a hard-disk, magnetic tape, a compact disk (CD), digital versatile disk (DVD), Blu-ray disk, holographic data storage media, or other non-volatile storage device.

The term "processor," as used herein may refer to any of the foregoing structure or any other structure suitable for implementation of the techniques described herein. In addition, in some aspects, the functionality described herein may be provided within dedicated software modules or hardware modules configured for performing the techniques of this disclosure. Even if implemented in software, the techniques may use hardware such as a processor to execute the software, and a memory to store the software. In any such cases, the computers described herein may define a specific machine that is capable of executing the specific functions described herein. Also, the techniques could be fully implemented in one or more circuits or logic elements, which could also be considered a processor.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor", as used may refer to any of the foregoing structure or any other structure suitable for implementation of the techniques described. In addition, in some aspects, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

It is to be recognized that depending on the example, certain acts or events of any of the methods described herein can be performed in a different sequence, may be added, merged, or left out altogether (e.g., not all described acts or events are necessary for the practice of the method). Moreover, in certain examples, acts or events may be performed concurrently, e.g., through multi-threaded processing, interrupt processing, or multiple processors, rather than sequentially.

In some examples, a computer-readable storage medium includes a non-transitory medium. The term "non-transitory" indicates, in some examples, that the storage medium is not embodied in a carrier wave or a propagated signal. In certain examples, a non-transitory storage medium stores data that can, over time, change (e.g., in RAM or cache).

Various examples have been described. These and other examples are within the scope of the following claims.

## Claims

1. An article of personal protective equipment, PPE, (100), comprising:
a first component (102) comprising a first power interface (104), a first communication module (106) including at least one first radio-frequency , RF, transceiver (108), and a first controller (112) communicably coupled to the first communication module (106), wherein the first controller (112) is configured to control the at least one first radio-frequency transceiver (108) of the first communication module to transmit data signals (114-1) and configured to receive data signals (114-2) from the at least one first radio-frequency transceiver of the first communication module, and wherein the first component further comprises a heads-up display, HUD, unit (420), wherein the HUD unit comprises a HUD interface (404) configured to exchange data signals with the first controller (112), and wherein the HUD interface comprises the first power interface (104);
a second component (152) comprising a second power interface (154), a second communication module (156) including at least one second radio-frequency transceiver (158), and a second controller (162) communicably coupled to the second communication module (156), wherein the second controller (162) is configured to control the at least one second radio-frequency transceiver (158) of the second communication module to transmit data signals and configured to receive data signals from the at least one second radio-frequency transceiver of the second communication module, and wherein the second component further comprises a microphone (466), an encoder-decoder module (462) communicably coupled to the microphone (466) and the second controller (162), a speaker driver circuit (464) communicably coupled to the encoder-decoder module (462), and one or more speakers (468) communicably coupled to the speaker driver circuit;
and
an intrinsic barrier (190) disposed between and physically separating the first communication module (106) from the second communication module (156);
wherein the first power interface (104) is configured to receive a first electric power and supply at least a portion of the first electric power to the first communication module (106) and the HUD unit (420), and the second power interface (154) is configured to receive a second electric power and supply at least a portion of the second electric power to the encoder-decoder module (462), the speaker driver circuit (464), the speakers (468) and the second communication module (156);
wherein the first communication module (106) and the second communication module (156) are configured to automatically and wirelessly exchange audio and/or video data signals (192) therebetween when a distance (D) between the first component (102) and the second component (152) is less than or equal to 10 centimeters; and
wherein the at least one first radio-frequency transceiver (108) and the at least one second radio-frequency transceiver (158) are configured to operate in an extremely high frequency, EHF, spectrum between 30 GHz and 300 GHz.

2. The article (100) of claim 1, further comprising one or more sensors (130) communicably coupled to the first controller (112) of the first component (102).

3. The article (100) of claim 1, wherein the first component (102) further comprises a first memory (116) communicably coupled to the first controller (112).

4. The article (100) of claim 1, wherein the first component further comprises one or more visual indicators (116) communicably coupled to the first controller (112).

5. The article (100) of claim 1, wherein the second component (152) further comprises a second memory (166) communicably coupled to the second controller (162).

6. The article (100) of claim 1, further comprising a common power source (210), wherein the first power interface (104) is electrically connected to the common power source (210) and the second power interface (154) is galvanically isolated from the common power source (210), wherein the first power interface (104) receives the first electric power from the common power source (210), and wherein the second power interface (154) receives the second electric power from the galvanically isolated common power source (210).

7. The article (100) of claim 1, wherein an intrinsic safety circuit is provided in at least one of the first power interface (104) and the second power interface (154).

8. The article (100) of claim 1, wherein the frst communication module (106) and the second communication module (156) each include a plurality of transceivers, each said plurality including a near-field magnetic induction, NFMI, transceiver.

9. The article (100) of claim 1, wherein the intrinsic barrier (190) comprises an air gap or a dielectric.

10. The article (100) of claim 1, wherein the first communication module (106) and the second communication module (156) do not include an intrinsic safety circuit.

11. The article (100) of PPE of claim 1 further comprising a facemask (402) and a regulator (452), wherein the facemask comprises the first component (102), and the regulator (452) comprises the second component (152);
wherein the regulator (452) is configured to be detachably mounted to the facemask (402) and to control a fluid supply to the facemask; and
wherein the PPE article (100) is further configured:
such that when the regulator (452) is detachably mounted to the facemask (402), the intrinsic barrier (190) is disposed between and physically separates the first communication module (106) from the second communication module (156); and
such that when the regulator (452) is detachably mounted to the facemask (402) and/or when the distance (D) between the first component (102) and the second component (152) is less than or equal to 10 centimeters, the first communication module (106) and the second communication module (156) automatically and wirelessly exchange data audio and/or video signals (192) therebetween .

## Patentansprüche

1. Ein Gegenstand einer persönlichen Schutzausrüstung (PSA) (100), aufweisend:
eine erste Komponente (102), aufweisend eine erste Energieschnittstelle (104), ein erstes Kommunikationsmodul (106), das mindestens einen ersten Hochfrequenz-, HF-, Sender-Empfänger (108) einschließt, und eine erste Steuerung (112), die kommunikativ an das erste Kommunikationsmodul (106) gekoppelt ist, wobei die erste Steuerung (112) konfiguriert ist, um den mindestens einen ersten Hochfrequenz-Sender-Empfänger (108) des ersten Kommunikationsmoduls zu steuern, um Datensignale (114-1) zu senden, und konfiguriert ist, um Datensignale (114-2) von dem mindestens einen ersten Hochfrequenz-Sender-Empfänger des ersten Kommunikationsmoduls zu empfangen, und wobei die erste Komponente ferner eine Warnanzeige-, HUD-, Einheit (420) aufweist, wobei die HUD-Einheit eine HUD-Schnittstelle (404) aufweist, die zum Austausch von Datensignalen mit der ersten Steuerung (112) konfiguriert ist, und wobei die HUD-Schnittstelle die erste Energieschnittstelle (104) aufweist;
eine zweite Komponente (152), aufweisend eine zweite Energieschnittstelle (154), ein zweites Kommunikationsmodul (156), das mindestens einen zweiten Hochfrequenz-Sender-Empfänger (158) einschließt, und eine zweite Steuerung (162), die kommunikativ an das zweite Kommunikationsmodul (156) gekoppelt ist, wobei die zweite Steuerung (162) konfiguriert ist, um den mindestens einen zweiten Hochfrequenz-Sender-Empfänger (158) des zweiten Kommunikationsmoduls zu steuern, um Datensignale zu senden, und konfiguriert ist, um Datensignale von dem mindestens einen zweiten Hochfrequenz-Sender-Empfänger des zweiten Kommunikationsmoduls zu empfangen, und wobei die zweite Komponente ferner ein Mikrofon (466), ein Codierer-Decodierer-Modul (462), das kommunikativ an das Mikrofon (466) und die zweite Steuerung (162) gekoppelt ist, eine Lautsprechertreiberschaltung (464), die kommunikativ an das Codierer-Decodierer-Modul (462) gekoppelt ist, aufweist, und ein oder mehrere Lautsprecher (468), die kommunikativ an die Lautsprechertreiberschaltung gekoppelt sind;
und
eine intrinsische Sperre (190), die zwischen dem ersten Kommunikationsmodul (106) und dem zweiten Kommunikationsmodul (156) angeordnet ist und beide physisch voneinander trennt;
wobei die erste Energieschnittstelle (104) konfiguriert ist, um eine erste elektrische Energie zu empfangen und mindestens einen Abschnitt der ersten elektrischen Energie dem ersten Kommunikationsmodul (106) und der HUD-Einheit (420) zuzuführen, und die zweite Energieschnittstelle (154) konfiguriert ist, um eine zweite elektrische Energie zu empfangen und mindestens einen Abschnitt der zweiten elektrischen Energie dem Codierer-Decodierer-Modul (462), der Lautsprechertreiberschaltung (464), den Lautsprechern (468) und dem zweiten Kommunikationsmodul (156) zuzuführen;
wobei das erste Kommunikationsmodul (106) und das zweite Kommunikationsmodul (156) konfiguriert sind, um automatisch und drahtlos Audio- und/oder Videodatensignale (192) untereinander auszutauschen, wenn ein Abstand (D) zwischen der ersten Komponente (102) und der zweiten Komponente (152) kleiner als oder gleich 10 Zentimeter ist; und
wobei der mindestens eine erste Hochfrequenz-Sender-Empfänger (108) und der mindestens eine zweite Hochfrequenz-Sender-Empfänger (158) konfiguriert sind, um in einem Extremhochfrequenz-, EHF-, Spektrum zwischen 30 GHz und 300 GHz zu arbeiten.

2. Der Gegenstand (100) nach Anspruch 1, ferner aufweisend einen oder mehrere Sensoren (130), die kommunikativ an die erste Steuerung (112) der ersten Komponente (102) gekoppelt sind.

3. Der Gegenstand (100) nach Anspruch 1, wobei die erste Komponente (102) ferner einen ersten Speicher (116) aufweist, der kommunikativ an die erste Steuerung (112) gekoppelt ist.

4. Der Gegenstand (100) nach Anspruch 1, wobei die erste Komponente ferner einen oder mehrere visuelle Indikatoren (116) aufweist, die kommunikativ an die erste Steuerung (112) gekoppelt ist.

5. Der Gegenstand (100) nach Anspruch 1, wobei die zweite Komponente (152) ferner einen zweiten Speicher (166) aufweist, der kommunikativ an die zweite Steuerung (162) gekoppelt ist.

6. Der Gegenstand (100) nach Anspruch 1, ferner aufweisend eine gemeinsame Energiequelle (210), wobei die erste Energieschnittstelle (104) elektrisch mit der gemeinsamen Energiequelle (210) verbunden ist und die zweite Energieschnittstelle (154) von der gemeinsamen Energiequelle (210) galvanisch getrennt ist, wobei die erste Energieschnittstelle (104) die erste elektrische Energie von der gemeinsamen Energiequelle (210) empfängt, und wobei die zweite Energieschnittstelle (154) die zweite elektrische Energie von der galvanisch getrennten gemeinsamen Energiequelle (210) empfängt.

7. Der Gegenstand (100) nach Anspruch 1, wobei eine intrinsische Sicherheitsschaltung in mindestens einer der ersten Energieschnittstelle (104) und der zweiten Energieschnittstelle (154) bereitgestellt ist.

8. Der Gegenstand (100) nach Anspruch 1, wobei das erste Kommunikationsmodul (106) und das zweite Kommunikationsmodul (156) jeweils eine Mehrzahl von Sender-Empfängern einschließen, wobei jede Mehrzahl einen Nahfeld-Magnetinduktions-, NFMI-, Sender-Empfänger einschließt.

9. Der Gegenstand (100) nach Anspruch 1, wobei die intrinsische Sperre (190) einen Luftspalt oder ein Dielektrikum aufweist.

10. Der Gegenstand (100) nach Anspruch 1, wobei das erste Kommunikationsmodul (106) und das zweite Kommunikationsmodul (156) keine intrinsische Sicherheitsschaltung einschließen.

11. Der PSA-Gegenstand (100) nach Anspruch 1, ferner aufweisend eine Gesichtsmaske (402) und einen Regler (452), wobei die Gesichtsmaske die erste Komponente (102) aufweist und der Regler (452) die zweite Komponente (152) aufweist;
wobei der Regler (452) konfiguriert ist, um lösbar an der Gesichtsmaske (402) montiert zu werden und eine Fluidzufuhr zu der Gesichtsmaske zu steuern; und
wobei der PSA-Gegenstand (100) ferner konfiguriert ist:
derart, dass, wenn der Regler (452) lösbar an der Gesichtsmaske (402) angebracht ist, die intrinsische Sperre (190) zwischen dem ersten Kommunikationsmodul (106) und dem zweiten Kommunikationsmodul (156) angeordnet ist und beide physisch voneinander trennt; und
derart, dass, wenn der Regler (452) lösbar an der Gesichtsmaske (402) angebracht ist und/oder wenn der Abstand (D) zwischen der ersten Komponente (102) und der zweiten Komponente (152) kleiner oder gleich 10 Zentimeter ist, das erste Kommunikationsmodul (106) und das zweite Kommunikationsmodul (156) automatisch und drahtlos einen Austausch von Daten-, Audio- und/oder Video-Signalen (192) untereinander vornehmen.

## Revendications

1. Article d'équipement de protection individuelle, EPI, (100), comprenant ;
un premier composant (102) comprenant une première interface d'alimentation (104), un premier module de communication (106) comportant au moins un premier émetteur-récepteur radiofréquence, RF, (108), et un premier dispositif de commande (112) couplé en communication au premier module de communication (106), dans lequel le premier dispositif de commande (112) est configuré pour commander l'au moins un premier émetteur-récepteur radiofréquence (108) du premier module de communication afin de transmettre des signaux de données (114-1) et configuré pour recevoir des signaux de données (114-2) en provenance de l'au moins un premier émetteur-récepteur radiofréquence du premier module de communication, et dans lequel le premier composant comprend en outre une unité d'affichage tête haute, HUD (420), dans lequel l'unité HUD comprend une interface HUD (404) configurée pour échanger des signaux de données avec le premier dispositif de commande (112), et dans lequel l'interface HUD comprend la première interface d'alimentation (104) ;
un second composant (152) comprenant une seconde interface d'alimentation (154), un second module de communication (156) comportant au moins un second émetteur-récepteur radiofréquence (158), et un second dispositif de commande (162) couplé en communication au second module de communication (156), dans lequel le second dispositif de commande (162) est configuré pour commander l'au moins un second émetteur-récepteur radiofréquence (158) du second module de communication afin de transmettre des signaux de données et configuré pour recevoir des signaux de données en provenance de l'au moins un second émetteur-récepteur radiofréquence du second module de communication, et dans lequel le second composant comprend en outre un microphone (466), un module encodeur-décodeur (462) couplé en communication au microphone (466) et au second dispositif de commande (162), un circuit d'attaque de haut-parleur (464) couplé en communication au module encodeur-décodeur (462), et un ou plusieurs haut-parleurs (468) couplés en communication au circuit d'attaque de haut-parleur ;
et
une barrière intrinsèque (190) disposée entre le premier module de communication (106) et le séparant physiquement du second module de communication (156) ;
dans laquelle la première interface d'alimentation (104) est configurée pour recevoir une première alimentation électrique et fournir au moins une partie de la première alimentation électrique au premier module de communication (106) et à l'unité HUD (420), et la seconde interface d'alimentation (154) est configurée pour recevoir une seconde alimentation électrique et fournir au moins une partie de la seconde alimentation électrique au module encodeur-décodeur (462), au circuit d'attaque de haut-parleur (464), aux haut-parleurs (468) et au second module de communication (156) ;
dans lequel le premier module de communication (106) et le second module de communication (156) sont configurés pour échanger automatiquement et sans fil des signaux de données audio et/ou vidéo (192) entre eux lorsqu'une distance (D) entre le premier composant (102) et le second composant (152) est inférieure ou égale à 10 centimètres ; et
dans lequel l'au moins un premier émetteur-récepteur radiofréquence (108) et l'au moins un second émetteur-récepteur radiofréquence (158) sont configurés pour fonctionner dans un spectre de fréquence extrêmement haute, EHF, entre 30 GHz et 300 GHz.

2. Article (100) selon la revendication 1, comprenant en outre un ou plusieurs capteurs (130) couplés en communication au premier dispositif de commande (112) du premier composant (102).

3. Article (100) selon la revendication 1, dans lequel le premier composant (102) comprend en outre une première mémoire (116) couplée en communication au premier dispositif de commande (112).

4. Article (100) selon la revendication 1, dans lequel le premier composant comprend en outre un ou plusieurs indicateurs visuels (116) couplés en communication au premier dispositif de commande (112).

5. Article (100) selon la revendication 1, dans lequel le second composant (152) comprend en outre une seconde mémoire (166) couplée en communication au second dispositif de commande (162).

6. Article (100) selon la revendication 1, comprenant en outre une source d'alimentation commune (210), dans lequel la première interface d'alimentation (104) est connectée électriquement à la source d'alimentation commune (210) et la seconde interface d'alimentation (154) est isolée de manière galvanique de la source d'alimentation commune (210), dans lequel la première interface d'alimentation (104) reçoit la première alimentation électrique de la source d'alimentation commune (210), et dans lequel la seconde interface d'alimentation (154) reçoit la seconde alimentation électrique de la source d'alimentation commune (210) isolée de manière galvanique.

7. Article (100) selon la revendication 1, dans lequel un circuit de sécurité intrinsèque est prévu dans au moins l'une parmi la première interface d'alimentation (104) et la seconde interface d'alimentation (154).

8. Article (100) selon la revendication 1, dans lequel le premier module de communication (106) et le second module de communication (156) comportent chacun une pluralité d'émetteurs-récepteurs, chaque dite pluralité comportant un émetteur-récepteur à induction magnétique en champ proche, NFMI.

9. Article (100) selon la revendication 1, dans lequel la barrière intrinsèque (190) comprend un entrefer ou un espace diélectrique.

10. Article (100) selon la revendication 1, dans lequel le premier module de communication (106) et le second module de communication (156) ne comportent pas de circuit de sécurité intrinsèque.

11. Article (100) EPI selon la revendication 1 comprenant en outre un masque facial (402) et un régulateur (452), dans lequel le masque facial comprend le premier composant (102), et le régulateur (452) comprend le second composant (152) ;
dans lequel le régulateur (452) est conçu pour être monté de manière amovible sur le masque facial (402) et pour commander une fourniture en fluide du masque facial ; et
dans lequel l'article EPI (100) est en outre configuré :
de telle sorte que lorsque le régulateur (452) est monté de manière amovible sur le masque facial (402), la barrière intrinsèque (190) est disposée entre le premier module de communication (106) et le sépare physiquement du second module de communication (156) ; et
de telle sorte que lorsque le régulateur (452) est monté de manière amovible sur le masque facial (402) et/ou lorsque la distance (D) entre le premier composant (102) et le second composant (152) est inférieure ou égale à 10 centimètres, le premier module de communication (106) et le second module de communication (156) échangent automatiquement et sans fil des signaux de données, audio et/ou vidéo (192) entre eux.
